# EUROPÄISCHE PATENTSCHRIFT

(11) **EP 2 791 581 B1**
(45) Veröffentlichungstag und Bekanntmachung des Hinweises auf die Patenterteilung: **29.04.2020**
(21) Anmeldenummer: 12801540.1
(22) Anmeldetag: 10.12.2012
(51) Int. Cl.: F23Q 7/00

(54) **DRUCKMESSGLÜHKERZE**
PRESSURE MEASURING GLOW PLUG
BOUGIE DE PRÉCHAUFFAGE MUNIE D'UN CAPTEUR DE PRESSION

(30) Priorität: 14.12.2011 DE 102011088468
(43) Veröffentlichungstag der Anmeldung: 22.10.2014
(73) Patentinhaber: Robert Bosch GmbH, 70442 Stuttgart (DE)
(72) Erfinder: SCHOLZEN, Holger, 70439 Stuttgart (DE); KOETZLE, Wolfgang, 71139 Ehningen (DE); WOLFF, Janpeter, 75449 Wurmberg (DE)
(86) Internationale Anmeldenummer: PCT/EP2012/074932
(87) Internationale Veröffentlichungsnummer: WO 2013/087564

(56) Entgegenhaltungen:
- EP-A1- 2 138 819
- DE-A1- 10 346 330
- DE-A1-102004 043 874
- JP-A- 2006 010 306
- JP-A- 2009 063 256
- JP-A- 2010 133 603

## Beschreibung

Die Erfindung betrifft eine Druckmessglühkerze zum Einsetzen in einen Zylinderkopf einer Brennkraftmaschine mit den Merkmalen des Oberbegriffs des Anspruchs 1.

### Stand der Technik

Aus EP 1 637806 A2 ist eine Druckmessglühkerze mit einem Glühmodul und einem Elektronikmodul bekannt, wobei das Glühmodul die Bauteile einer Glühkerze und das Elektronikmodul eine Sensoreinheit mit einem Drucksensor und ein Steckergehäuse zur Kontaktierung eines Anschlusssteckers enthält. Das Glühmodul ist von einem massiven Glühkerzengehäuse umgeben, welches mit einem Elektronikmodulgehäuse verbundnen ist. Das Elektronikmodulgehäuse umschießt die Sensoreinheit und teilweise das Steckergehäuse. Die Sensoreinheit und das Steckergehäuse sind zwei voneinander getrennte separate Bauteile.

Aus JP 2009 22 90 39 A1 ist eine Druckmessglühkerze mit einem Glühkerzengehäuse bekannt, wobei zusätzlich eine Signalverarbeitungseinheit zur Vorverarbeitung der Signale einer Sensoreinheit in die Druckmessglühkerze integriert ist. Das Glühkerzengehäuse nimmt dabei einen Glühstift, die Sensoreinheit und die Signalverarbeitungseinheit auf. Am Glühkerzengehäuse ist brennraumseitig ein zusätzliches Schutzgehäuse angebracht, das über einer Membran befestigt und mit dem Glühkerzenkörper verbunden ist. An das Glühkerzengehäuse schließt sich anschlussseitig die elektrische Steckerverbindung an.

EP 2 138 819 A1 bezieht sich auf eine piezoresistive Druckmessglühkerze für eine Verbrennungskraftmaschine. Ein Kerzenkörper dient zur Halterung der Glühkerze im Zylinder einer Verbrennungskraftmaschine. Eine Stange ist im Kerzenkörper ausgebildet, ferner eine Sensoranordnung, die ein piezoresistives Element enthält. Dieses ist zwischen der Stange und dem Kerzenkörper angeordnet. Wird im Betrieb auf die Sensorstruktur eingewirkt, was durch den in der Brennkammer des Zylinders vorherrschenden Druck erfolgt und wobei die Stange den Druck der Brennkammer des Zylinders auf die Sensorstruktur überträgt, erfolgt eine Axialbewegung der Stange relativ zum Kerzenkörper, so dass eine Kraft auf die Sensorstruktur ausgeübt wird. Die Messglühkerze umfasst ferner einen länglichen Hohlkörper an einem Ende, der mit dem Kerzenkörper verbunden ist und einen Oberflächenteil aufweist und sich der längliche Hohlkörperteil nahezu reibungsfrei in den Kerzenkörper erstreckt. Die Sensorstruktur ist an einem Ende eines unteren Körperteiles gegenüber dem Ende angebracht, welches mit dem Dichtflächenteil verbunden ist.

JP 2010 133 603 A bezieht sich auf eine Glühkerze, die eine Verbrennungsdruckmessfunktion umfasst. Die Glühkerze mit der Verbrennungsdruckmessfunktion ist in der Verbrennungskraftmaschine am Zylinderkopf eingebaut und bildet einen Teil der Kammerwand der Brennkammer. Die Glühkerze unterstützt den Zündvorgang durch Aufheizen des eingespritzten Kraftstoffes, wobei ein Heizteil, welches durch eine Stromquelle beheizt wird sich in die Brennkammer erstreckt. Die Glühkerze umfasst ein Verbrennungsdruckmessmittel zur Messung des in der Druckkammer auf den Heizteil wirkenden Druckes. Durch Übertragung von Wellen einer Primärspule, die als Sender wirkt zu einem Empfangsmittel erfolgt die Signalübertragung.

### Offenbarung der Erfindung

Die Erfindung mit den kennzeichnenden Merkmalen des Anspruchs 1 hat den Vorteil, dass die Druckmessglühkerze modular ausbildbar ist. Dadurch können Glühmodul und Elektronikmodul als vormontierbare Baueinheiten gefertigt werden, die vor dem Zusammenbau von Glühmodulgehäuse und Elektronikmodulgehäuse lediglich an einer Stelle eine elektrische Kontaktierung des Glühmoduls und des Kontaktiermoduls erfordern.

Vorteilhafte Weiterbildungen der Erfindung sind durch die Maßnahmen der Unteransprüche möglich.

Zur Ausführung der Verbindung des Elektronikmodulgehäuses weist das Elektronikmodulgehäuse eine glühmodulseitigen Verbindungsstelle und eine steckerseitige Verbindungsstelle auf, wobei das Elektronikmodulgehäuse mit der glühmodulseitigen Verbindungsstelle mit dem Glühmodulgehäuse und mit der steckerseitigen Verbindungsstelle mit dem Steckergehäuse verbunden ist.

Zwischen Glühmodulgehäuse und Elektronikmodulsgehäuse ist eine Schnittstelle ausgebildet, an der zumindest an einer glühmodulseitigen Stirnseite der Kontaktiereinheit freiliegende glühmodulseitige Kontakt zur Kontaktierung des Glühmoduls, insbesondere zur Kontaktierung der Sensoreinheit ausgebildet sind. Eine weitere Vereinfachung wird dadurch erzielt, wenn die Schnittstelle zusätzlich an der glühmodulseitigen Stirnseite der Kontaktiereinheit einen freiliegenden Hochstromkontakt zur Kontaktierung des Anschlussbolzens des Glühmoduls aufweist. Zur Vereinfachung der Montage von Elektronikmodul und Glühmodul ragen die freiliegenden sensorseitigen Kontakte und/oder der Hochstromkontakt im unverbauten Zustand der Druckmessglühkerze an der glühmodulseitigen Stirnseite aus dem Elektronikmodulgehäuse heraus, so dass die freiliegenden sensorseitigen Kontakte und/oder der Hochstromkontakt frei zugänglich sind.

Zur Arretierung des Elektronikmodulgehäuses ist das Elektronikmodulgehäuse mit mindestens einem trägerseitigen Stützabschnitt und mindestens einen steckerseitigen Stützabschnitt ausgeführt, wobei sich das Elektronikmodulgehäuse mit dem trägerseitigen Stützabschnitt an mindestens einem trägerseitigen Trägerabschnitt und mit dem steckerseitigen Stützabschnitt an mindestens einem steckerseitigen Trägerabschnitt abstützt oder dort geführt ist. Dazu sind weiterhin am steckerseitigen Trägerabschnitt ein Dichtring und ein schweißbarer, metallischer Halteringe angeordnet, wobei das Elektronikmodulgehäuse mit dem steckerseitigen Stützabschnitt den steckerseitigen Trägerabschnitt zumindest am Dichtring dichtend umschließt und am Haltering befestigt ist. Zweckmäßig ist dabei, wenn der trägerseitige Stützabschnitt mindestes einen ersten zylindrischen Abschnitt mit mindestens einem ersten Innendurchmesser und der steckerseitigen Stützabschnitt mindestens einen zweiten zylindrischen Abschnitt mit mindestens einem zweiten Innendurchmesser bilden, und wenn der Innendurchmesser des steckerseitigen Trägerabschnitts größer ist als der Innendurchmesser des trägerseitigen Stützabschnitts.

Zur Vermeidung von zu langen Bohrungen bei der Herstellung des Elektronikmodulgehäuse ist das Elektronikmodulgehäuse aus mindestens zwei Gehäuseteilen zusammengesetzt, wobei das erste Gehäuseteile den ersten sensorseitigen Stützabschnitt mit mindestens dem ersten Innendurchmesser und das zweiten Gehäuseteil den steckerseitigen Stützabschnitt mit mindestens dem zweiten Innendurchmesser ausgebildet.

### Ausführungsbeispiele

Ausführungsbeispiele der Erfindung sind in der Zeichnung dargestellt und in der nachfolgenden Beschreibung näher erläutert.

Es zeigen:
- Figur 1: eine Schnittdarstellung durch eine erfindungsgemäße Druckmesseinrichtung in der Ausbildung einer Druckmessglühkerze,
- Figur 2: eine Schnittdarstellung eines Kontaktiermoduls der Druckmessglühkerze aus Figur 1 gemäß einer ersten Ausführungsform und
- Figur 3: eine Schnittdarstellung eines Kontaktiermoduls der Druckmessglühkerze aus Figur 1 gemäß einer zweiten Ausführungsform.

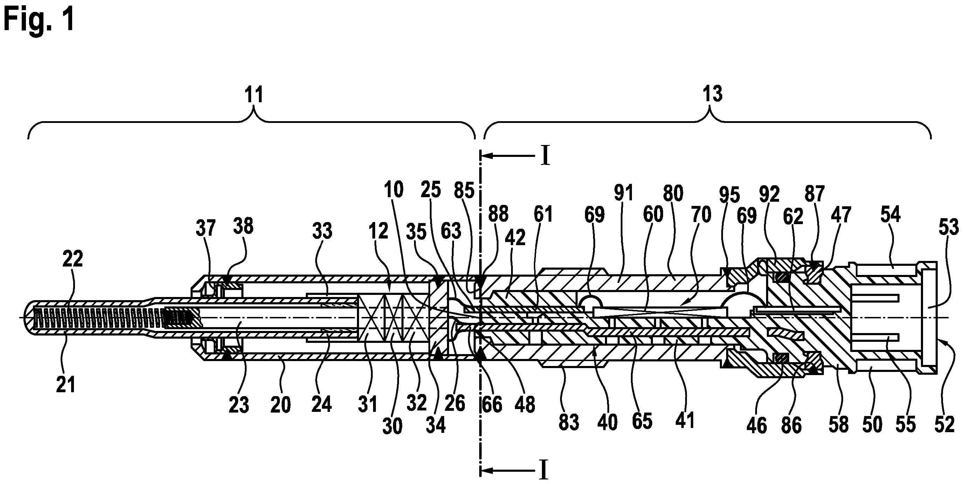

Die in Figur 1 dargestellte Druckmessglühkerze vereint eine konventionelle Glühkerze zum Einsatz in selbstzündenden Brennkraftmaschinen mit einer zusätzlichen Druckmessfunktion einer Druckmesseinrichtung zur Erfassung eines Brennraumdrucks der Brennkraftmaschine. Die Druckmessglühkerze umfasst im Wesentlichen ein Glühmodul 11 und ein Elektronikmodul 13, die zumindest zum Teil in einem Gehäuse aufgenommen sind. Das Gehäuse umfasst mindestens ein Glühmodulgehäuse 20, ein Elektronikmodulgehäuse 80 und ein Steckergehäuse 50.

Das Glühmodul 11 beinhaltet die eigentlichen Bauteile einer Glühkerze und eine Sensoreinheit 12 zur Druckmessung. Das Glühmodul 11 umfasst einen in ein Glühmodulgehäuse 20 eingesetzten Glühstift 21, wobei der Glühstift 21 aus dem Glühmodulgehäuse 20 hervorsteht und mit dem hervorstehenden Teil in den Brennraum der Brennkraftmaschine ragt und dadurch den Druckaufnehmer bildet. Der Glühstift 21 ist im vorliegenden Ausführungsbeispiel ein metallisches Glührohr, in dem eine Heizwendel 22 angeordnet ist, die mit dem Glührohr und mit einem Anschlussbolzen 23 kontaktiert ist. Zwischen Glührohr und Anschlussbolzen 23 ist ferner ein elektrisch isolierendes Dichtelement 24 angeordnet. Es ist aber auch möglich, den Glühstift 21 als keramisches Heizelement auszuführen.

Die Sensoreinheit 12 ist innerhalb des Glühmodulgehäuses 20 untergebracht und weist beispielsweise einen piezoelektrischen Drucksensor 30, ein glührohrseitiges Druckstück 31 und ein fixierelementseitiges Druckstück 32 auf, wobei der Drucksensor 30 zwischen dem glührohrseitigen Druckstück 31 und dem fixierelementseitigen Druckstück 32 positioniert ist. Die Sensoreinheit 12 umfasst weiterhin ein hülsenförmiges Übertragungselement 33 und eine Fixierelement 34. Das hülsenförmige Übertragungselement 33 ist um die Öffnung herum fest mit dem Glührohr 21 verbunden und drückt mit einer Stirnfläche auf das glührohrseitige Druckstück 31, so dass das Übertragungselement 33 den auf das Glührohr 21 wirkenden Druck im Brennraum auf den Drucksensor 30 überträgt. Das Fixierelement 34 ist zur Ausbildung eines festen Gegenlagers für den Drucksensor 30 am Glühmodulgehäuse 20 beispielsweise mittels einer umlaufenden ersten Schweißnaht 35 befestigt. Zur Ausführung einer axialen Bewegung infolge des auf den Glühstift 21 wirkenden Drucks ist der Glühstift 21 mittels einer biegeelastischen Membran 37 mit dem Glühmodulsgehäuse 20 beispielsweise mittels einer umlaufenden zweiten Schweißnaht 38 verbunden.

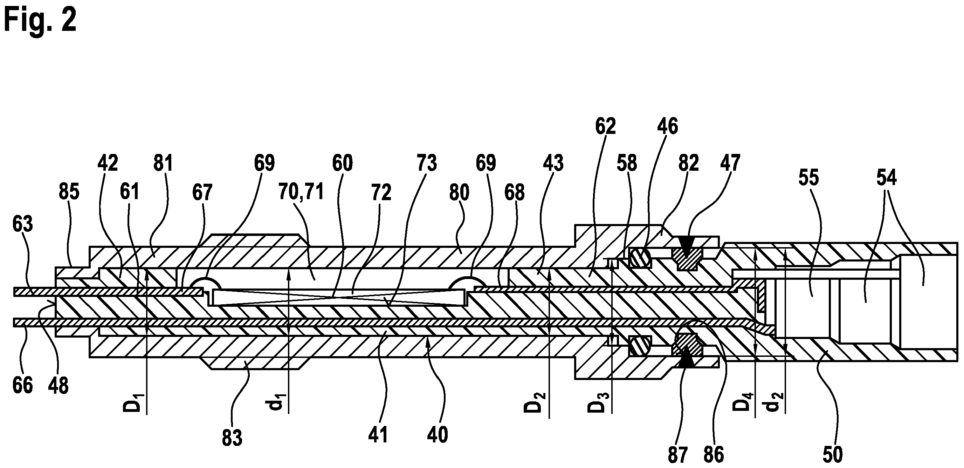

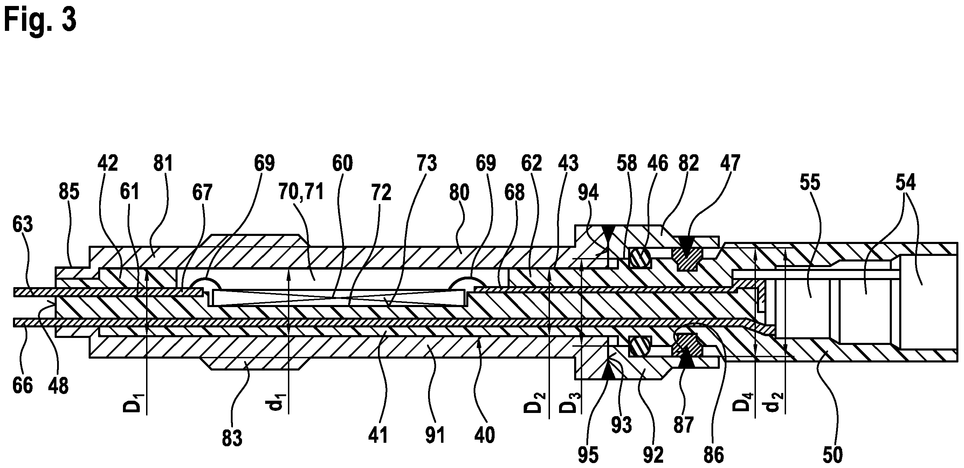

Das Elektronikmodul 13 weist eine Kontaktiereinheit 40 auf, welche in Figur 2 and 3 im Detail dargestellt ist. Die Kontaktiereinheit 40 umfasst einen Träger 41 zur Aufnahme einer Signalverarbeitungseinheit 60 bzw. eines Schaltkreises der Signalverarbeitungseinheit 60, beispielsweise eines ASIC, und eine elektrische Steckerverbindung 52 zur Kontaktierung eines nicht dargestellten Anschlusssteckers. Die Steckerverbindung 52 weist am Steckergehäuse 50 beispielsweise ringförmige Anschlusskontakte 54 und im Zentrum einen Hochstromkontakt 55 zur Kontaktierung des Anschlusssteckers auf.

Der Träger 41 und das Steckergehäuse 50 sind aus einem elektrisch isolierenden Material, beispielweise aus einem Kunststoff ausgeführt, wobei der Träger 41 in einer axialen Längserstreckung an das Steckergehäuse 50 angeformt ist. Dadurch erstreckt sich die Kontaktiereinheit 40 in axialer Längserstreckung der Druckmesseinrichtung. Fertigungstechnisch zweckmäßig ist, wenn der Träger 41 und das Steckergehäuse 50 aus dem gleichen elektrisch isolierendem Material hergestellt sind und der Träger 41 integraler Bestand des Steckergehäuses 50 ist. Dadurch lassen sich Träger 41 und Steckergehäuse 50 als einstückiges Bauteil beispielsweise mittels Spritzgießen herstellen. Es ist aber auch denkbar, den Träger 41 und das Steckergehäuse 50 als getrennte Bauteile auszubilden, die auf geeignet Weise zumindest über elektrischen Verbindungen kontaktiert sind.

Der Träger 41 weist einen Aufnahmeabschnitt 70 zur Aufnahme der Signalverarbeitungseinheit 60 bzw. des Schaltkreises der Signalverarbeitungseinheit 60 auf. Der Aufnahmeabschnitt 70 ist dabei als eine in die Mantelfläche der zylindrischen Ausführung des Trägers 41 eingebrachte Aussparung 71 beispielsweise mit einer zusätzlichen Vertiefung 72 mit einer im Wesentlichen ebenen Bodenfläche 73 ausgeführt. Die Aussparung 71 mit der Bodenfläche 73 der Vertiefung 72 verläuft dabei im Wesentlichen parallel zur Achse der Längserstreckung des Trägers 41 und läuft quer zur axialen Längserstreckung des Trägers 41 am Außenumfang des Trägers 41 aus. Die Bodenfläche 73 der Vertiefung 72 liegt beispielsweise radial höchstens etwa in der Mitte des Trägers 41, so dass einerseits keine zu starke Schwächung des Zylinderabschnitts des Trägers 41 entsteht und andererseits aber eine ausreichend große Bodenfläche 73 für den Aufnahmeabschnitt 70 am Träger 41 ausgebildet wird. Die Signalverarbeitungseinheit 60 wird auf der Bodenfläche 73 positioniert und ist dabei in der Vertiefung 73 zumindest teilweise versenkt.

Der Träger 41 ist im Wesentlichen zylindrisch ausgeführt und weist gemäß Figur 2 und 3 beispielsweise einen ersten trägerseitigen Trägerabschnitt 42 mit einem ersten Durchmesser D1 und axial beabstandet davon in Richtung des Steckergehäuses 50 einen zweiten trägerseitigen Trägerabschnitt 43 mit einem zweiten Durchmesser D2 auf, wobei der erste Durchmesser D1 und der zweite Durchmesser D2 im Wesentlichen gleich groß sind. Am Steckergehäuse 50 ist ein steckerseitiger Trägerabschnitt 58 mit einem dritten Durchmesser D3 ausgeführt. Am steckerseitigen Trägerabschnitt 58 ist ein Dichtring 46 und ein schweißbarer, metallischer Haltering 47 mit einem Außendurchmesser D4 angeordnet, wobei der Haltering 47 vorzugsweise in das Material des Steckergehäuses 50 eingeformt ist. Der am weiteren steckerseitigen Trägerabschnitt 58 ausgeführte dritte Durchmesser D3 und der Außendurchmesser D4 des Halterings 47 sind jeweils größer als jeweils die beiden Durchmesser D1 und D2 des trägerseitigen Trägerabschnitts 42 und 43.

Am Träger 41 ist gemäß Figur 1 weiterhin eine Schnittstelle 10 zur Kontaktierung des Glühmoduls 11 ausgebildet. Die Schnittstelle 10 wird von an einer glühmodulseitigen Stirnseite 48 des ersten trägerseitigen Trägerabschnitts 42 ausgebildeten freiliegenden glühmodulseitigen Kontakte 63 zur Kontaktierung des Sensormoduls 12 und einem freiliegender glühmodulseitigen Hochstromkontakt 66 zur Kontaktierung des Anschlussbolzens 23 gebildet, wobei die Kontaktierung der Sensoreinheit 12 über eine elektrische Verbindung 25 und die Kontaktierung des Anschlussbolzens 23 über eine weitere elektrische Verbindung 26 erfolgt.

In den Träger 41 und in das Steckergehäuse 50 sind weiterhin sensorseitige Anschlussleitungen 61 und steckerseitige Anschlussleitungen 62 integriert. Die sensorseitigen Anschlussleitungen 61 führen mit einem Ende zu den freiliegenden sensorseitigen Kontakten 63. Das andere Ende der sensorseitigen Anschlussleitungen 61 ist mit sensorseitigen Anschlusskontakten 67 für die Signalverarbeitungseinheit 60 verbunden. Die steckerseitigen Anschlussleitungen 62 sind an einem Ende mit steckerseitigen Anschlusskontakten 68 für die Signalverarbeitungseinheit 60 und weiter durch das Steckergehäuse 50 hindurch mit den ringförmigen Anschlusskontakten 54 der Steckerverbindung 52 elektrisch verbunden. Die elektrische Kontaktierung der Signalverarbeitungseinheit 60 erfolgt jeweils mittels elektrischer Verbindungen 69, die mit den sensorseitigen Anschlusskontakten 67 und den steckerseitigen Anschlusskontakten 68 kontaktiert sind.

Mit einem radialen Abstand von den sensorseitigen und steckerseitigen Anschlussleitungen 61, 62 versehen verläuft axial durch die Kontaktiereinheit 40 weiterhin eine Hochstromleitung 65, die sensorseitig zu dem freiliegenden Hochstromkontakt 66 führt. Steckerseitig führt die Hochstromleitung 65 weiter durch das Steckergehäuse 50 hindurch zu dem Hochstromkontakt 55 an der Steckerverbindung 52. Die sensorseitige und steckerseitige Anschlussleitungen 61, 62 und/oder die Hochstromleitung 65 sind zweckmäßigerweise in den Träger 41 und in das Steckergehäuse 50 eingegossen. Zweckmäßigerweise werden die an der glühmodulseitigen Stirnseite 48 des Trägers 41 vorhandene sensorseitige Kontakte 63 von den in den Träger 41 integrierten sensorseitigen Anschlussleitungen 61 gebildet. Dementsprechend kann der an der sensorseitigen Stirnseite 48 ebenfalls vorhandene Hochstromkontakt 66 von der in den Träger 41 integrierten Hochstromleitung 65 gebildet werden.

Die Kontaktiereinheit 40 ist zumindest teilweise von dem rohrförmigen Elektronikmodulgehäuse 80 umgeben, wobei der Träger 41 vollständig und das Steckergehäuse 50 teilweise von dem Elektronikmodulgehäuse 80 umgeben ist. Am Elektronikmodulgehäuse 80 ist ein Außengewinde 83 zum Einschrauben in einen Zylinderkopf der Brennkraftmaschine angeordnet ist. Das Elektronikmodulgehäuse 80 kann dabei einstückig oder mehrstückig ausgeführt sein.

Das Elektronikmodulgehäuse 80 weist mindestens einen trägerseitigen Stützabschnitt 81 mit mindestens einen ersten zylindrischen Abschnitt mit mindestens einem ersten Innendurchmesser d1 und mindestens einen steckerseitigen Stützabschnitt 82 mit mindestens einen zweiten zylindrischen Abschnitt mit mindestens einem zweiten Inndurchmesser d2 auf. Der zweite Innendurchmesser d2 des steckerseitigen Stützabschnitts 82 ist dabei größer als der erste Innendurchmesser d1 des trägerseitigen Stützabschnitts 81. Dadurch entsteht ein zylindrisches Elektronikmodulgehäuse 80 mit mindestens einer Zylinderstufe. Der erste Innendurchmesser d1 des trägerseitigen Stützabschnitts 81 ist zumindest an den Durchmesser D1 des ersten trägerseitigen Trägerabschnitts 42 und des eventuell vorhanden zweiten trägerseitigen Trägerabschnitt 43 angepasst. Der zweiten Innendurchmesser d2 des steckerseitigen Stützabschnitts 82 ist an den Durchmesser D3 des steckerseitigen Trägerabschnitts 58 und an den Durchmesser D4 des Halterings 47 angepasst, derart, dass das Elektronikmodulgehäuse 80 mit dem trägerseitigen Stützabschnitt 81 zumindest den Durchmesser D1 des ersten trägerseitigen Trägerabschnitts 42 und den eventuell weiterhin vorhanden zweiten Durchmesser D2 des zweiten Trägerabschnitts 43 umgibt und sich dort abstützt bzw. dort geführt ist. Der zweite Innendurchmesser d2 steckerseitigen Stützabschnitts 82 des Elektronikmodulgehäuses 80 ist an den Durchmesser D3 des steckerseitigen Trägerabschnitts 58 und an den Außendurchmesser D4 des Halteringes 47 angepasst, derart, dass der mindestens eine steckerseitige Innendruchmesser d2 den steckerseitigen Trägerabschnitt 58 umgibt und dabei dichtend den Dichtring 46 umschließt und am Haltering 47 anliegt.

Die Schnittstelle 10 befindet sich in einer senkrecht zur axialen Längserstreckung des Druckmessglühkerzen liegenden Ebene I - I, in der im unverbauten Zustand der Druckmessglühkerze sich die an der glühmodulseitigen Stirnfläche 48 des Trägers 41 freiliegenden sensorseitigen Kontakten 63 außerhalb des Elektronikmodulgehäuse 80 befinden und somit am Elektronikmodul 13 frei zugänglich sind. Somit kann an der Schnittstelle 10 die elektrische Kontaktierung des Glühmoduls 11 und der Sensoreinheit 12 bei vormontiertem Elektronikmodul 13 erfolgen.

Das Elektronikmodulgehäuse 80 weist eine glühmodulseitige Verbindungsstelle 85 und steckerseitige Verbindungsstelle 86 auf. Eine Verbindung des Elektronikmodulgehäuses 80 mit dem Steckergehäuse 50 wird mittels der steckerseitigen Verbindungsstelle 86 realisiert, indem das Elektronikmodulgehäuse 80 mit der steckerseitigen Verbindungsstelle 86 am Haltering 47 beispielsweise mittels einer umlaufenden Schweißnaht 87 befestigt wird. Eine weitere Verbindung des Elektronikmodulgehäuses 80 mit dem Glühmodulgehäuse 20 wird an der glühmodulseitige Verbindungsstelle 85 realisiert, indem das Glühmodulgehäuse 20 an der glühmodulseitigen Verbindungsstelle 85 mit dem Elektronikmodulgehäuse 80 beispielsweise durch eine weitere umlaufende Schweißnaht 88 befestigt wird. Die glühmodulseitige Verbindungsstelle 88 liegt dabei zumindest in der Nähe der Ebene I - I.

Beim Ausführungsbeispiel gemäß Figur 2 ist das Elektronikmodulgehäuse 80 einstückig aus einem schweißbaren metallischen Material ausgeführt. Das Elektronikmodulgehäuse 80 wird über den Träger 41 geschoben und wird dabei mit dem trägerseitigen Stützabschnitt 81 am ersten trägerseitigen Trägerabschnitt 42 und am zweiten trägerseitigen Trägerabschnitt 43 sowie mit dem steckerseitigen Stützabschnitt 82 am steckerseitigen Trägerabschnitts 58 geführt. Dann wird das Elektronikmodulgehäuses 80 mit der steckerseitigen Verbindungsstelle 86 am Haltering 47 mittels der Schweißnaht 87 verweißt. Anschließend wird die elektrische Kontaktierung der freiliegenden sensorseitigen Kontakte 63 und des freiliegenden Hochstromkontaktes 66 über die elektrischen Verbindungen 25, 26 mit den Anschlüssen des Drucksensors 30 und dem Anschluss des Anschlussbolzens 23 des vorgefertigten Glühmodul 12 durchgeführt. Schließlich wird danach das Glühmodulgehäuse 20 mit dem Elektronikmodulgehäuse 80 an der glühmodulseitigen Verbindungsstelle 85 mittels der Schweißnaht 88 verschweißt.

Beim Ausführungsbeispiel gemäß Figur 3, das auch in Figur 1 dargestellt ist, ist das Elektronikmodulgehäuse 80 aus fertigungstechnischen Gründen aus einem ersten Gehäuseteil 91 und einem zweiten Gehäuseteil 92 zusammengesetzt. Beide Gehäuseteile 91 und 92 sind aus Festigkeitsgründen aus einem schweißbaren Metall ausgeführt, wobei das erste Gehäuseteil 91 das Außengewinde 83 zum Einschrauben in den Zylinderkopf aufweist. Am ersten Gehäuseteile 91 ist der trägerseitige Stützabschnitt 81 mit dem Durchmesser d1 und am zweiten Gehäuseteil 92 der steckerseitige Stützabschnitt 82 mit dem Durchmesser d2 ausgebildet. Die beiden Gehäuseteile 91 und 92 werden an einer weiteren Verbindungsstelle 94 mittels beispielsweise einer umlaufenden Schweißnaht 95 verbunden. Der weitere Zusammenbau erfolgt wie beim Ausführungsbeispiel in Figur 2, indem der steckerseitige Stützabschnitt 82 am steckerseitigen Trägerabschnitt 58 und der trägerseitigen Stützabschnitt 81 am ersten trägerseitigen Trägerabschnitt 42 und am eventuell vorhanden zweiten trägerseitigen Trägerabschnitt 43 geführt sind. Dann wird das Elektronikmodulgehäuses 80 mit der steckerseitigen Verbindungsstelle 86 am Haltering 47 mittels der Schweißnaht 87 verweißt. Anschließend wird die elektrische Kontaktierung der freiliegenden sensorseitigen Kontakte 63 und des freiliegenden Hochstromkontaktes 66 über die elektrischen Verbindungen 25, 26 mit den Anschlüssen des Drucksensors 30 und dem Anschluss des Anschlussbolzens 23 des vorgefertigten Glühmodul 12 durchgeführt. Schließlich wird danach das Glühmodulgehäuse 20 mit dem Elektronikmodulgehäuse 80 an der glühmodulseitigen Verbindungsstelle 85 mittels der Schweißnaht 88 verschweißt.

## Patentansprüche

1. Druckmessglühkerze mit einem Gehäuse, in dem ein Glühstift (21) zum Zünden eines Verbrennungsgemisches einer Brennkraftmaschine und ein Drucksensor (30) zur Erfassung eines Brennraumdrucks der Brennkraftmaschine angeordnet sind, mit einer Kontaktiereinheit (40), die einen Träger (41) zur Aufnahme einer Signalverarbeitungseinheit (60) und eine Steckerverbindung (52) mit Anschlusskontakten (54) aufweist, wobei der Glühstift (21) dem Brennraumdruck ausgesetzt ist und den Brennraumdruck auf den Drucksensor (30) zumindest mittelbar überträgt, und wobei ein Steckergehäuse (50) für die Steckerverbindung (52) vorgesehen ist, **dadurch gekennzeichnet, dass** mindestens ein Glühmodulgehäuse (20) zur Aufnahme des Glühstifts (21) und des Drucksensors (30) und ein Elektronikmodulgehäuse (80) zur Aufnahme des Trägers (41) vorgesehen sind, wobei sich das Elektronikmodulgehäuse (80) mit mindestens einem trägerseitigen Stützabschnitt (81) an mindestens einem trägerseitigen Trägerabschnitt (42, 43) des Trägers (41) abstützt oder dort geführt ist, und zwischen Glühmodulgehäuse (20) und Elektronikmodulgehäuse (80) eine Schnittstelle (10) ausgebildet ist, die an einer glühmodulseitigen Stirnseite (48) der Kontaktiereinheit (40) freiliegende glühmodulseitige Kontakte (63) aufweist und die Schnittstelle (10) zusätzlich einen an der glühmodulseitigen Stirnseite (48) der Kontaktiereinheit (40) freiliegenden Hochstromkontakt (65) aufweist, und die freiliegenden glühmodulseitigen Kontakte (63) und/oder der freiliegende Hochstromkontakt (66) im unverbauten Zustand der Druckmessglühkerze außerhalb des Elektronikmodulgehäuses (80) zugänglich sind..

2. Druckmessglühkerze nach Anspruch 1, **dadurch gekennzeichnet, dass** das Elektronikmodulgehäuse (80) mit mindestens einer glühmodulseitigen Verbindungsstelle (85) mit dem Glühmodulgehäuse (20) und mit mindestens einer steckerseitigen Verbindungsstelle (86) mit dem Steckergehäuse (51) verbunden ist.

3. Druckmessglühkerze nach Anspruch 1, **dadurch gekennzeichnet, dass** sich das Elektronikmodulgehäuses (80) mit mindestens einem steckerseitigen Stützabschnitt (82) an mindestens einem steckerseitigen Trägerabschnitt (58) des Steckergehäuses (50) abstützt oder dort geführt ist.

4. Druckmessglühkerze nach Anspruch 3, **dadurch gekennzeichnet, dass** am steckerseitigen Trägerabschnitt (58) ein Dichtring (46) und ein schweißbarer Haltering (47) angeordnet sind, und dass das Elektronikmodulgehäuse (80) mit dem steckerseitigen Stützabschnitt (82) den Dichtring (46) dichtend umschließt und am Haltering (47) befestigt ist.

5. Druckmessglühkerze nach Anspruch 1, 3 oder 4, **dadurch gekennzeichnet, dass** der trägerseitige Stützabschnitt (81) mindestes einen ersten zylindrischen Abschnitt mit mindestens einem ersten Innendurchmesser d1 und der steckerseitigen Stützabschnitt (82) mindestens einen zweiten zylindrischen Abschnitt mit mindestens einem zweiten Innendurchmesser d2 bilden, und dass der Innendurchmesser d2 des steckerseitigen Stützabschnitts (82) größer ist als der Innendurchmesser d1 des trägerseitigen Stützabschnitts (81).

6. Druckmessglühkerze nach einem der vorhergehenden Ansprüche, **dadurch gekennzeichnet, dass** das Elektronikmodulgehäuse (80) aus mindestens zwei Gehäuseteilen (91, 92) zusammengesetzt ist, und dass das erste Gehäuseteile (91) den trägerseitigen Stützabschnitt (81) mit mindestens dem ersten Innendurchmesser d1 und das zweiten Gehäuseteil (92) den steckerseitigen Stützabschnitt (82) mit mindestens dem zweiten Innendurchmesser d2 ausgebildet.

## Claims

1. Pressure-measuring glow plug comprising a housing in which a glow plug (21) for igniting a combustion mixture of an internal combustion engine and a pressure sensor (30) for detecting a combustion chamber pressure of the internal combustion engine are arranged, comprising a contact-making unit (40) which has a carrier (41) for receiving a signal-processing unit (60) and a plug connection (52) with connection contacts (54), wherein the glow plug (21) is exposed to the combustion chamber pressure and at least indirectly transmits the combustion chamber pressure to the pressure sensor (30), and wherein a plug housing (50) is provided for the plug connection (52), **characterized in that** at least one glow module housing (20) for receiving the glow plug (21) and the pressure sensor (30) and one electronics module housing (80) for receiving the carrier (41) are provided, wherein the electronics module housing (80), by way of at least one carrier-side supporting section (81), is supported on at least one carrier-side carrier section (42, 43) of the carrier (41) or is guided there, and an interface (10) is formed between the glow module housing (20) and the electronics module housing (80), which interface has glow module-side contacts (63) which are exposed on a glow module-side end side (48) of the contact-making unit (40), and the interface (10) additionally has a high-current contact (65) which is exposed on the glow module-side end side (48) of the contact-making unit (40), and the exposed glow module-side contacts (63) and/or the exposed high-current contact (66) are/is accessible in the uninstalled state of the pressure-measuring glow plug outside the electronics module housing (80).

2. Pressure-measuring glow plug according to Claim 1, **characterized in that** the electronics module housing (80), by way of at least one glow module-side connecting point (85), is connected to the glow module housing (20) and, by way of at least one plug-side connecting point (86), to the plug housing (51).

3. Pressure-measuring glow plug according to Claim 1, **characterized in that** the electronics module housing (80), by way of at least one plug-side supporting section (82), is supported on at least one plug-side carrier section (58) of the plug housing (50) or guided there.

4. Pressure-measuring glow plug according to Claim 3, **characterized in that** a sealing ring (46) and a weldable retaining ring (47) are arranged on the plug-side carrier section (58), and **in that** the electronics module housing (80), by way of the plug-side supporting section (82), surrounds the sealing ring (46) in a sealing manner and is fastened to the retaining ring (47).

5. Pressure-measuring glow plug according to Claim 1, 3 or 4, **characterized in that** the carrier-side supporting section (81) forms at least one first cylindrical section with at least one first inside diameter d1 and the plug-side supporting section (82) forms at least one second cylindrical section with at least one second inside diameter d2, and **in that** the inside diameter d2 of the plug-side supporting section (82) is greater than the inside diameter d1 of the carrier-side supporting section (81) .

6. Pressure-measuring glow plug according to one of the preceding claims, **characterized in that** the electronics module housing (80) is made up of at least two housing parts (91, 92), and **in that** the first housing part (91) forms the carrier-side supporting section (81) with at least the first inside diameter d1 and the second housing part (92) forms the plug-side supporting section (82) with at least the second inside diameter d2.

## Revendications

1. Bougie de préchauffage à mesure de pression, comprenant un boîtier dans lequel sont disposés une tige incandescente (21) destinée à allumer un mélange de combustion d'un moteur à combustion interne et un capteur de pression (30) destiné à détecter une pression de chambre de combustion du moteur à combustion interne, comprenant une unité de mise en contact (40), laquelle possède un élément porteur (41) destiné à accueillir une unité de traitement de signal (60) et une connexion par fiche (52) pourvue de contacts de raccordement (54), la tige incandescente (21) étant exposée à la pression de la chambre de combustion et transmettant la pression de la chambre de combustion au moins indirectement au capteur de pression (30), et un boîtier de fiche (50) étant présent pour la connexion par fiche (52), **caractérisée en ce qu'**au moins un boîtier de module de préchauffage (20) destiné à accueillir la tige incandescente (21) et le capteur de pression (30) ainsi qu'un boîtier de module électronique (80) destiné à accueillir l'élément porteur (41) sont présents, le boîtier de module électronique (80) s'appuyant par au moins une portion d'appui (81) côté élément porteur contre au moins une portion d'élément porteur (42, 43) côté élément porteur de l'élément porteur (41) ou y étant guidé, et entre le boîtier de module de préchauffage (20) et le boîtier de module électronique (80) étant formée une interface (10) qui possède au niveau d'un côté frontal côté module de préchauffage (48) de l'unité de mise en contact (40) des contacts côté module de préchauffage (63) exposés et l'interface (10) possédant en plus un contact à courant fort (65) exposé au niveau du côté frontal côté module de préchauffage (48) de l'unité de mise en contact (40), et les contacts côté module de préchauffage (63) exposés et/ou le contact à courant fort (66) exposé étant accessibles à l'extérieur du boîtier de module électronique (80) dans l'état non monté de la bougie de préchauffage à mesure de pression.

2. Bougie de préchauffage à mesure de pression selon la revendication 1, **caractérisée en ce que** le boîtier de module électronique (80) est relié au boîtier de module de préchauffage (20) par au moins un point de connexion côté module de préchauffage (85) et au boîtier de fiche (51) par au moins un point de connexion côté fiche (86).

3. Bougie de préchauffage à mesure de pression selon la revendication 1, **caractérisée en ce que** le boîtier de module électronique (80) s'appuie par au moins une portion d'appui (82) côté fiche contre au moins une portion d'élément porteur côté fiche (58) du boîtier de fiche (50) ou y est guidé.

4. Bougie de préchauffage à mesure de pression selon la revendication 3, **caractérisée en ce qu'**une bague d'étanchéité (46) et une bague de maintien (47) soudable sont disposées au niveau de la portion d'élément porteur côté fiche (58), et **en ce que** le boîtier de module électronique (80) entoure la bague d'étanchéité (46) de manière étanche avec la portion d'appui (82) côté fiche et est fixé à la bague de maintien (47).

5. Bougie de préchauffage à mesure de pression selon la revendication 1, 3 ou 4, **caractérisée en ce que** la portion d'appui (81) côté élément porteur forme au moins une première portion cylindrique ayant au moins un premier diamètre intérieur d1 et la portion d'appui (82) côté fiche forme au moins une deuxième portion cylindrique ayant au moins un deuxième diamètre intérieur d2, et **en ce que** le diamètre intérieur d2 de la portion d'appui (82) côté fiche est supérieur au diamètre intérieur d1 de la portion d'appui (81) côté élément porteur.

6. Bougie de préchauffage à mesure de pression selon l'une des revendications précédentes, **caractérisée en ce que** le boîtier de module électronique (80) est constitué d'au moins deux parties de boîtier (91, 92), et **en ce que** la première partie de boîtier (91) forme la portion d'appui (81) côté élément porteur ayant au moins le premier diamètre intérieur d1 et la deuxième partie de boîtier (92) forme la portion d'appui (82) côté fiche ayant au moins le deuxième diamètre intérieur d2.
